# EUROPÄISCHE PATENTSCHRIFT

(11) **EP 0 682 201 B1**
(45) Veröffentlichungstag und Bekanntmachung des Hinweises auf die Patenterteilung: **12.08.1998**
(21) Anmeldenummer: 95106974.9
(22) Anmeldetag: 09.05.1995
(51) Int. Cl.: F16L 11/08

(54) **Chemikalienfester Sicherheitsschlauch**
Safety hose resistant to chemicals
Tuyau souple de sécurité résistant aux agents chimiques

(30) Priorität: 13.05.1994 DE 4416953
(43) Veröffentlichungstag der Anmeldung: 15.11.1995
(73) Patentinhaber: Continental Aktiengesellschaft, 30165 Hannover (DE); Ehlers, Karlheinz, D-22525 Hamburg (DE)
(72) Erfinder: Wydra, Wolfgang, D-34516 Vöhl (DE); Gründel, Wolfgang, D-34516 Dorfritter (DE); Emde, Willi, D-34516 Vöhl-Basdorf (DE); Ehlers, Karlheinz, D-22525 Hamburg (DE)
(74) Vertreter: Schneider, Egon

(56) Entgegenhaltungen:
- DE-C- 146 859
- DE-U- 1 991 055
- US-A- 4 330 017

## Beschreibung

Die Erfindung betrifft einen chemikalienfesten Sicherheitsschlauch gemäß dem Oberbegriff des Patentanspruchs 1.

Ein derartiger Sicherheitsschlauch ist beispielsweise aus der DE-OS 43 13 142 bekannt, deren Gegenstand allerdings das Hauptproblem von Schläuchen, durch die gefährliche, das heißt, insbesondere brennbare bzw. explosible, giftige oder ätzende Medien gefördert werden, nicht löst, da er lediglich bezüglich Überdruckdefekten eine gewisse Sicherheit verspricht und da bei ihm Schlauchdefekte lediglich verzögert werden und sich nicht in von außen erkennbarer Weise so ankündigen, daß rechtzeitig eine Gegenmaßnahme ergriffen und der Schlauch ausgewechselt werden kann.

Es ist zwar auch bekannt - siehe z. B. DE-OS 23 06 465 - in die Wandung von Sicherheitsschläuchen elektrische Leiter zu integrieren, durch die im Falle eines Defektes auf unterschiedliche Weise ein elektrisches Signal ausgelöst wird, jedoch sind solche elektrischen Anzeige- oder Alarmsysteme unter Umständen problematisch, wenn es sich bei den geförderten Medien um leichtentzündliche Substanzen handelt, die durch eine mögliche Funkenbildung in dem betreffenden elektrischen System zur Explosion gebracht werden können.

Der vorliegenden Erfindung liegt daher die Aufgabe zugrunde, einen chemikalienfesten Sicherheitsschlauch zu schaffen, bei dem im Falle eines Defektes an der Schlauchinnenschicht, durch den aggressive durch den Schlauch geförderte Medien an die Verstärkungseinlagen der Schlauchwandung gelangen, eine hinreichende Sicherheits-Festigkeitsreserve besteht, um ein kurzfristiges Platzen des Schlauches zu verhindern.

Diese Aufgabe wird erfindungsgemäß durch einen gattungsgemäßen Sicherheitsschlauch gelöst, der die im kennzeichnenden Teil des Patentanspruches 1 angegebenen Merkmale aufweist. In den Unteransprüchen sind vorteilhafte Ausführungsformen und Ausgestaltungen der Erfindung gekennzeichnet.

Dadurch, daß in der Wandung eines erfindungsgemäßen Sicherheitsschlauches zusätzlich zu einer radial inneren Verstärkungseinlage eine radial äußere Verstärkungseinlage vorgesehen ist, deren Fäden oder Drähte gegenüber den durch den Schlauch geförderten Medien eine größere chemische Resistenz aufweisen, ist auch im Falle einer chemischen Zerstörung der radial inneren Verstärkungseinlage eine hinreichende Festigkeitsreserve vorhanden, die das Platzen des Schlauches verhindert. Vorzugsweise ist die radial äußere Verstärkungseinlage durch ihre konstruktive Dimensionierung und/oder durch die Auswahl der ihre Fäden oder Drähte bildenden Werkstoffe so ausgeführt, daß sie eine dem Förderdruck des geförderten Mediums standhaltende Festigkeit aufweist, so daß der Schlauch im normalen bestimmungsgemäßen Betrieb für einen hinreichend langen Zeitraum voll einsatzfähig bleibt.

In einer bevorzugten Ausführungsform des erfindungsgemäßen Sicherheitsschlauches ist seine die radial äußere Verstärkungseinlage umgebende polymere Außenwandungsschicht mit feinen Perforationen versehen, die bewirken, daß im Falle eines Defektes der Schlauchinnenschicht das geförderte Medium in kleinsten Mengen durch die Schlauchwandung hindurchtreten kann, an der Wandungsoberfläche des Schlauches eine sichtbare Befeuchtung bewirkt und schließlich zur Bildung von Tropfen bzw. kleinen Pfützen unter der Defektstelle des Schlauches führt. Diese Befeuchtung der Schlauchoberfläche bzw. Tropfen oder Pfützen unter dem Schlauch sind für das Wartungspersonal ein eindeutiger Hinweis auf das Vorliegen eines Defektes.

Vorzugsweise ist die lichte Weite der Perforationskanäle kleiner als 0,5 mm. Für die meisten praktischen Anwendungsfälle der erfindungsgemäßen Sicherheitsschläuche hat sich eine Perforation als besonders vorteilhaft erwiesen, die aus geschlossenen, elastisch aufweitbaren Kanälen gebildet ist. Ferner hat sich eine Perforationsdichte von 0,5 bis 5 Kanäle pro cm² als besonders zweckmäßig erwiesen.

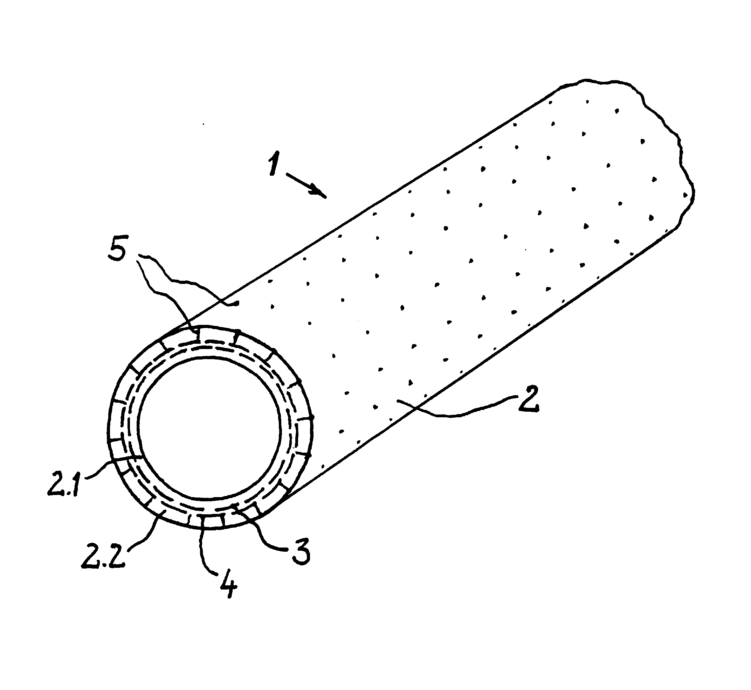

Die beigefügte Zeichnung zeigt ein Ausführungsbeispiel eines erfindungsgemäßen chemikalienfesten Sicherheitsschlauches in schematischer, nicht maßstäblicher Darstellung:

In die Wandung 2 des dargestellten Schlauches 1 sind zwischen der Innenschicht 2.1 und der Außenschicht 2.2 zwei Verstärkungseinlagen 3 und 4 eingebettet. Erfindungsgemäß ist die äußere Verstärkungseinlage 4 aus Fäden oder Drähten gebildet, die gegenüber den durch den Schlauch geförderten Medien eine größere chemische Resistenz aufweisen, als die Fäden bzw. Drähte der radial inneren Verstärkungseinlage 3. Die Verstärkungseinlage 4 ist dabei vorzugsweise so ausgeführt, daß sie allein eine dem Förderdruck des geförderten Mediums standhaltende Festigkeit aufweist.

Die Außenwandungsschicht 2.2 des dargestellten Schlauches weist regelmäßig angeordnete feine Perforationskanäle 5 auf, durch die im Falle eines Defektes der Innenwandungsschicht 2.1 kleine Mengen des durch den Schlauch geförderten Mediums durch die Schlauchwandung hindurch bis an deren Oberfläche gelangen können, dort zu einer deutlich sichtbaren Befeuchtung führen und so den Defekt anzeigen..

## Patentansprüche

1. Sicherheitsschlauch (1) zum Fördern von chemisch aggressiven Medien, dessen Wandung (2) aus Polymeren, insbesondere Elastomeren, gebildet ist und mindestens zwei konzentrisch angeordnete, aus Fäden oder Drähten gebildete Verstärkungseinlagen, und zwar mindestens je eine innere (3) und eine äußere (4) Verstärkungseinlage, enthält,
**dadurch gekennzeichnet**,
daß die radial äußere(n) Verstärkungseinlage(n) (4) aus Fäden oder Drähten gebildet ist (sind), die gegenüber den bestimmungsgemäß durch den Schlauch geförderten Medien eine größere chemische Resistenz aufweisen als die radial innere(n) Verstärkungseinlage(n) (3).

2. Schlauch nach Anspruch 1, dadurch gekennzeichnet, daß die radial äußere(n) Verstärkungseinlage(n) (4) allein eine dem Förderdruck des geförderten Mediums standhaltende Festigkeit aufweist (aufweisen).

3. Schlauch nach Anspruch 1 oder 2, dadurch gekennzeichnet, daß seine die radial äußere(n) Verstärkungseinlage(n) (4) umgebende polymere Außenwandungsschicht (2.2) feinperforiert ist.

4. Schlauch nach Anspruch 3, dadurch gekennzeichnet, daß die lichte Weite der Perforationskanäle (5) kleiner als 0,5 mm ist.

5. Schlauch nach Anspruch 4, dadurch gekennzeichnet, daß die Perforation aus geschlossenen, elastisch aufweitbaren Kanälen (5) gebildet ist.

6. Schlauch nach einem der Ansprüche 3 bis 5, dadurch gekennzeichnet, daß die Perforationsdichte 0,5 bis 5 Kanäle pro cm² beträgt.

7. Schlauch nach einem der Ansprüche 1 bis 6, dadurch gekennzeichnet, daß seine Wandungsaußenfläche eine Beschichtung aufweist, die bei Befeuchtung mit dem geförderten Medium einen deutlich sichtbaren Farbumschlag erfährt.

## Claims

1. Safety hose (1) for the conveyance of chemically corrosive media, the wall (2) of which hose is formed from polymers, more especially elastomers, and includes at least two concentrically disposed reinforcing layers formed from filaments or wires, that is to say at least one inner reinforcing layer (3) and one outer reinforcing layer (4), characterised in that the radially outer reinforcing layer(s) (4) is (are) formed from filaments or wires which have a greater chemical resistance to the media, conveyed through the hose as specified, than the radially inner reinforcing layer(s) (3).

2. Hose according to claim 1, characterised in that the radially outer reinforcing layer(s) (4) alone has (have) a strength which withstands the conveying pressure of the medium conveyed.

3. Hose according to claim 1 or 2, characterised in that its polymeric outer wall layer (2.2), which surrounds the radially outer reinforcing layer(s) (4), is finely perforated.

4. Hose according to claim 3, characterised in that the internal width of the perforation channel (5) is smaller than 0.5 mm.

5. Hose according to claim 4, characterised in that the perforation is formed from continuous, resiliently expandable channels (5).

6. Hose according to one of claims 3 to 5, characterised in that the perforation density is between 0.5 and 5 channels per cm².

7. Hose according to one of claims 1 to 6, characterised in that its outer wall surface has a coating which undergoes a clearly visible colour change when wetted with the conveyed medium.

## Revendications

1. Tuyau souple de sécurité (1) pour transporter des fluides chimiquement agressifs, dont la paroi (2) est formée de polymères, en particulier d'élastomères, et contient au moins deux garnitures d'armature insérées, disposées concentriquement et formées de fils, souples ou raides, et de façon plus précise au moins une garniture d'armature insérée intérieure (3) et une garniture d'armature insérée extérieure (4),
caractérisé
par le fait que la garniture (les garnitures) d'armature insérée(s) radialement extérieure(s) (4) est formée (sont formées) de fils souples ou raides, qui présentent, à l'égard des fluides transportés par le tuyau conformément aux prescriptions, une résistance chimique supérieure à celle de la garniture (des garnitures) d'armature insérée(s) radialement intérieure(s) (3).

2. Tuyau souple selon la revendication 1, caractérisé par le fait que la garniture (les garnitures) d'armature insérée(s) radialement extérieure(s) (4) présente(nt) à elle(s) seule(s) une solide résistance à l'égard de la pression dynamique du fluide transporté.

3. Tuyau souple selon la revendication 1 ou 2, caractérisé par le fait que sa couche de paroi extérieure polymère (2.2) entourant la(les) garniture(s) d'armature insérée(s) radialement extérieure(s) (4) est finement perforée.

4. Tuyau souple selon la revendication 3, caractérisé par le fait que le passage libre des canaux de perforation (5) est inférieur à 0,5 mm.

5. Tuyau souple selon la revendication 4, caractérisé par le fait que la perforation est formée de canaux fermés (5), élastiquement expansibles.

6. Tuyau souple selon l'une des revendications 3 à 5, caractérisé par le fait que la densité de perforation vaut de 0,5 à 5 canaux par cm².

7. Tuyau souple selon l'une des revendications 1 à 6, caractérisé par le fait que sa surface extérieure de paroi présente un revêtement qui, en cas d'humidification par le fluide transporté, subit un virage de couleur nettement visible.
